# EUROPÄISCHE PATENTSCHRIFT

(11) **EP 3 556 593 B1**
(45) Veröffentlichungstag und Bekanntmachung des Hinweises auf die Patenterteilung: **19.01.2022**
(21) Anmeldenummer: 18168563.7
(22) Anmeldetag: 20.04.2018
(51) Int. Cl.: B60K 11/06, F01P 11/10, B60P 1/04, B60R 19/52, B60K 11/08

(54) **ARBEITSFAHRZEUG MIT EINER AUSLASSSEITIGEN KÜHLLUFTABLENKEINRICHTUNG**
WORK VEHICLE WITH A COOLANT AIR DEFLECTION DEVICE AT THE OUTLET
VÉHICULE DE TRAVAIL DOTÉ D'UN DISPOSITIF DÉFLECTEUR D'AIR DE REFROIDISSEMENT CÔTÉ SORTIE

(43) Veröffentlichungstag der Anmeldung: 23.10.2019
(73) Patentinhaber: Wacker Neuson Linz GmbH, 4063 Hörsching (AT)
(72) Erfinder: Farthofer, Dieter, 4052 Ansfelden (AT); Peterseil, Johannes, 4312 Katsdorf (AT); Schauer, Markus, 4160 Aigen (AT)
(74) Vertreter: Müller Hoffmann & Partner

(56) Entgegenhaltungen:
- EP-A1- 0 468 322
- EP-A1- 1 571 046
- EP-A2- 3 211 141
- US-A- 3 786 891
- US-A1- 2003 057 005

## Beschreibung

Die Erfindung betrifft ein Arbeitsfahrzeug mit einer in einem Motorraum angeordneten Brennkraftmaschine und einem oberhalb des Motorraums angeordneten Bedienplatz.

Bei derartigen Arbeitsfahrzeugen wird üblicherweise Kühlluft für den Motorraum mittels eines Kühlluftgebläses durch einen Kühler hindurch angesogen. Das Kühlluftgebläse fördert bzw. drückt die Kühlluft anschließend durch den Motorraum, wobei die Kühlluft den Motorraum an einem Kühlluftauslass wieder verlässt.

Bei einer derartigen Konstruktion einer Kühllufteinrichtung wird angesaugte Kühlluft durch den Kühler sehr stark erwärmt. Die bereits stark erwärmte Kühlluft strömt dann in den Motorraum unterhalb des Bedienplatzes bzw. einer Fahrerkabine, so dass es zu einer spürbaren Erwärmung des Bedienplatzes bzw. der Fahrerkabine kommt. Ferner wird auch der Motorraum zusätzlich erwärmt. Bei derartigen Kühllufteinrichtungen kann in Abhängigkeit von der Fahrtrichtung der Effekt auftreten, dass stark erwärmte, aus dem Motorraum ausgestoßene Kühlluft erneut wieder angesogen wird. Somit ist nicht ausreichend kalte Luft zur thermischen Regulierung verfügbar, was zu Überhitzungen führen kann.

EP 0 468 322 A1 offenbart einen Rasentraktor mit einer Fahrzeugmotorabdeckung, bei der auf beiden Seiten des Motorraums Lufteinlässe vorgesehen sind, über die Kühlluft in den Motorraum einströmen kann. Die Kühlluft wird über einen Kühlergrill an der Frontseite der Maschine ausgeblasen.

In der EP 1 571 046 A1 wird eine Baumaschine beschrieben, bei der in einem Motorraum mithilfe eines Gebläses ein Kühlluftstrom entlang eines Verbrennungsmotors erzeugt wird.

Die US 3,786,891, US 2003/0057005 A1 und die EP 3 211 141 A2 offenbaren verschiedene Varianten von Arbeitsfahrzeugen mit verschiedenen Kühlprinzipien für eine Brennkraftmaschine.

Die der Erfindung zur Grunde liegende Aufgabe wird darin gesehen, ein Arbeitsfahrzeug anzugeben, bei dem eine verbesserte Kühlung des Motorraums ermöglicht wird.

Diese Aufgabe wird gelöst durch den Gegenstand des unabhängigen Anspruchs 1. Vorteilhafte Ausgestaltungen mit zweckmäßigen Weiterbildungen sind in den abhängigen Ansprüchen angegeben.

Es wird ein Arbeitsfahrzeug vorgeschlagen mit einer in einem Motorraum angeordneten Brennkraftmaschine, einem oberhalb des Motorraums angeordneten Bedienplatz und mit einer Kühllufteinrichtung mit einem Kühllufteinlass, einem Kühlluftauslass, einem Kühlluftgebläse, sowie einem im Strömungsweg der Kühlluft durch den Motorraum zwischen dem Kühllufteinlass und dem Kühlluftauslass angeordneten Kühler. Dabei ist bezogen auf eine Hauptfahrtrichtung des Arbeitsfahrzeugs der Kühllufteinlass des Motorraums an einer ersten (seitlichen) Fahrzeugseite und/oder Fahrzeugunterseite vorgesehen und der Kühlluftauslass des Motorraums ist an einer Fahrzeugvorderseite vorgesehen, wobei der Kühlluftauslass eine Kühlluftablenkeinrichtung aufweist, die so ausgebildet ist, dass austretende Kühlluft in Richtung einer zweiten (seitlichen) Fahrzeugseite geführt wird.

Der Kühlluftstrom tritt in einem schrägen Winkel zur Hauptfahrtrichtung aus (in einer Draufsicht), so dass er zu einer Seite des Fahrzeugs geführt wird. Somit wird austretende Kühlluft bei Bewegung des Arbeitsfahrzeugs in Hauptfahrtrichtung bereits im Kühlluftauslass so umgelenkt, dass sie durch den gegen den Kühlluftauslass anströmenden Fahrtwind nahezu vollständig zur zweiten (seitlichen) Fahrzeugseite hin verdrängt wird. Entsprechend wird aus dem Motorraum entweichende, erwärmte Kühlluft nicht wieder angesogen, weil sich der Kühllufteinlass auf der anderen (seitlichen) Fahrzeugseite (erste Seite des Fahrzeugs) und/oder an der Fahrzeugunterseite befindet. Somit wird durch den Kühllufteinlass stets frische kühlere Umgebungsluft angesaugt.

Das Kühlluftgebläse kann bezogen auf den Kühlluftstrom stromaufwärts von dem Kühler und stromabwärts von der Brennkraftmaschine angeordnet sein. Somit wird im Motorraum befindliche Luft, die im Motorraum etwas erwärmt worden ist, durch den Kühler hindurch gefördert. Somit ist verhindert, dass zum Zwecke der Motorraumkühlung einströmende Luft zunächst im Kühler erwärmt wird. Entsprechend kann eine thermische Überbelastung ausgeschlossen werden.

Der Kühler kann bezogen auf den Kühlluftstrom stromaufwärts von dem Kühlluftauslass und stromabwärts von dem Kühlluftgebläse angeordnet sein. Hierdurch ist gewährleistet, dass durch den Kühler hindurchgetretene Kühlluft den Motorraum auf kurzem Wege durch den Kühlauslass verlassen kann.

Hieraus ergibt sich, dass der Kühllufteinlass stromaufwärts von dem Kühlluftgebläse angeordnet ist, wobei die Brennkraftmaschine im Strömungsweg der Kühlluft zwischen dem Kühllufteinlass und dem Kühlluftgebläse angeordnet ist. Somit wird durch das Kühlluftgebläse ausreichend kühle Luft direkt aus der Umgebung des Arbeitsfahrzeugs in den Motorraum angesaugt, ohne dass die frisch angesaugte Luft zunächst den Kühler passiert und aufgewärmt wird.

Die Kühlluftablenkeinrichtung kann mehrere in dem Kühlluftauslass angeordnete Luftleitbleche aufweisen, die bezogen auf eine Strömungsquerschnittsebene durch den Kühlluftauslass geneigt angeordnet sind. Die geneigten Luftleitbleche ermöglichen eine gezielte Umlenkung von austretender Kühlluft.

Dabei können die Luftleitbleche in dem Kühlluftauslass im Wesentlichen vertikal und zueinander parallel angeordnet sein. Somit bilden die Luftleitbleche vertikal stehende um eine vertikale Achse gedrehte bzw. geneigte Strömungshindernisse, die den Kühlluftstrom zu einer Seite hin ablenken.

Die Luftleitbleche können mit einer in der Strömungsquerschnittsebene liegenden, gedachten Gerade, die im Wesentlichen horizontal, parallel zu einer Fahrzeugvorderachse verläuft, einen spitzen Winkel bilden, der auf der von der ersten Fahrzeugseite abgewandten Luftleitblechseite liegt. Der spitze Winkel kann etwa 25° bis 60° betragen, vorzugsweise etwa 35° bis 50°. Hierdurch wird gewährleistet, dass die ausströmende Kühlluft in ausreichendem Maße zur gewünschten Seite hin umgelenkt wird, ohne dass eine zwischen zwei benachbarten Luftleitblechen vorhandene Ausströmöffnung einen zu geringen Strömungsquerschnitt aufweist, der das Entweichen von Kühlluft stark behindert.

Die Brennkraftmaschine kann mit ihrer Antriebsachse in Längsrichtung des Arbeitsfahrzeugs eingebaut sein. Dies ermöglicht einen bezogen auf die Längsachse des Fahrzeugs seitlich versetzten Einbau. Dabei kann die Brennkraftmaschine beispielsweise näher zur ersten Fahrzeugseite hin angeordnet sein, wo auch der Kühllufteinlass angeordnet ist, so dass einströmende Umgebungsluft, gleich die Brennkraftmaschine umströmt.

Der Bedienplatz kann in einer Kabine untergebracht sein. Dabei kann die Kabine einen auf der zweiten Fahrzeugseite angeordneten Kabinenzugang aufweisen. Der Kabinenzugang kann beispielsweise eine schwenkbare Türe sein. Hierdurch wird sichergestellt, dass der Kühllufteinlass auf der ersten Fahrzeugseite dauerhaft frei ist. Dies ist auch der Fall, wenn sich der Kühllufteinlass an der Fahrzeugunterseite befindet.

Das Arbeitsfahrzeug kann ein Dumper sein mit einer bezogen auf eine Hauptfahrtrichtung hinter dem Bedienplatz angeordneten Kippmulde. Hierdurch wird sichergestellt, dass besonders bei längeren Transportfahrten mit dem Dumper nicht die unübersichtliche, mit Material gefüllte Kippmulde das Blickfeld des Fahrers einschränkt.

Der Bedienplatz kann um 180° drehbar sein, derart, dass der Bedienplatz entweder in Hauptfahrtrichtung oder entgegen der Hauptfahrtrichtung ausrichtbar und feststellbar ist. Somit kann der Bedienplatz je nach durchzuführender Arbeit bzw. Fahrstrecke entsprechend den Bedürfnissen ausgerichtet werden.

Falls der Bedienplatz durch die bereits erwähnte Kabine geschützt bzw. umgeben ist, kann der Bedienplatz relativ zur Kabine drehbar sein. Das heißt, die Kabine bleibt fest mit dem Arbeitsfahrzeug bzw. dessen Karosserie verbunden, während der Bedienplatz samt entsprechender Bedienelemente wie Lenkrad, Fußpedale und sonstiger Bedienelemente gedreht werden kann.

Weitere Vorteile, Merkmale und Einzelheiten der Erfindung ergeben sich aus der nachfolgenden Beschreibung einer beispielhaften Ausführungsform sowie anhand der Zeichnungen. Dabei zeigen
- **Fig. 1**: in den Teilfiguren A) und B) zwei schematische Perspektivdarstellungen eines Arbeitsfahrzeugs von unterschiedlichen Seiten;
- **Fig. 2**: in einer vereinfachten schematischen Darstellung das Arbeitsfahrzeug der Figur 1 in einer seitlichen Aufrissdarstellung;
- **Fig. 3**: eine Schnittdarstellung durch einen Motorraum des Arbeitsfahrzeugs entsprechend der Schnittlinie III-III der Figur 2; und
- **Fig. 4**: eine vergrößerte Darstellung eines Kühlluftauslasses entsprechend dem in Figur 3 gestrichelt umrandeten Bereichs IV.

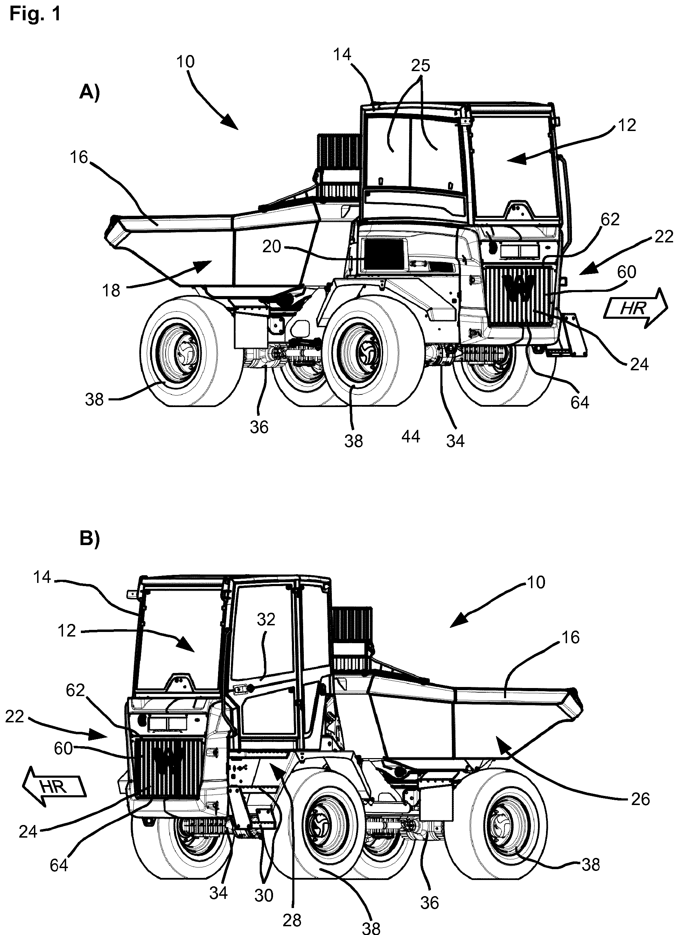

In Figur 1 ist in den Teilfiguren A) und B) schematisch und vereinfacht ein Arbeitsfahrzeug 10 in einer jeweiligen Perspektivdarstellung gezeigt. Das Arbeitsfahrzeug 10 ist hier beispielhaft ein sogenannter Dumper. Ein Bedienplatz 12 des Arbeitsfahrzeugs 10 ist im vorliegenden Beispiel in einer Kabine 14 angeordnet. Die Kabine 14 ist optional und das Arbeitsfahrzeug 10 kann auch mit einem Bedienplatz 12 ohne Kabine 14 ausgeführt sein. Der Bedienplatz 12 liegt bezogen auf eine Hauptfahrtrichtung HR vor einer Kippmulde 16 des Arbeitsfahrzeugs 10.

Auf einer ersten Fahrzeugseite 18 (Fig. 1A) des Arbeitsfahrzeugs 10, die im vorliegenden Beispiel der rechten Seite entspricht bezogen auf die Hauptfahrtrichtung HR, ist ein Kühllufteinlass 20 angeordnet. Der Kühllufteinlass 20 ist eine an der Karosserie bzw. an Verkleidungsteilen 44 des Arbeitsfahrzeugs 10 vorgesehene Öffnung, hinter der sich ein in Figur 1 nicht sichtbarer Motorraum befindet. An der Fahrzeugvorderseite 22 ist ein Kühlluftauslass 24 angeordnet. Auch der Kühlluftauslass 24 ist eine an der Karosserie bzw. an Verkleidungsteilen des Arbeitsfahrzeugs 10 vorgesehene Öffnung zum nicht sichtbaren Motorraum hin. Im dargestellten Beispiel des Arbeitsfahrzeugs 10 mit einer Kabine 14, wird noch darauf hingewiesen, dass die Kabine auf der ersten Fahrzeugseite 18 zwei relativ zueinander bewegliche Schiebefenster 25 aufweist.

Auf einer zweiten Fahrzeugseite 26 (Fig. 1B) des Arbeitsfahrzeugs ist ein Zugang 28 zum Bedienplatz 12 bzw. der Kabine 14 vorgesehen. Im vorliegenden Beispiel umfasst der Zugang 28 zum Bedienplatz 12 mehrere Stufen bzw. Tritte 30 und eine Kabinentüre 32.

Der Vollständigkeit halber wird noch erwähnt, dass das Arbeitsfahrzeug 10 eine Vorderachse 34 und einer Hinterachse 36 aufweist, wobei an jeder Achse zwei Räder 38 angebracht sind.

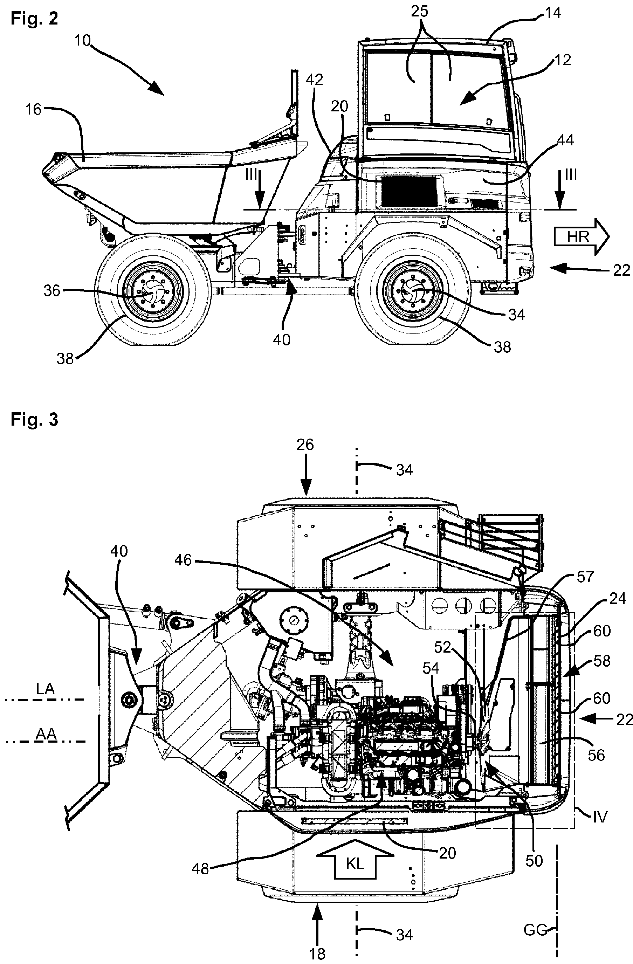

Figur 2 zeigt einen vereinfachten und schematischen, Aufriss der ersten (rechten) Fahrzeugseite 18. Es wird darauf hingewiesen, dass in der Figur 2 bereits bekannte Bezugszeichen aus der Figur 1 dargestellt sind, auch wenn die betreffenden Elemente des Arbeitsfahrzeugs nicht nochmals beschrieben werden. Aus der Darstellung der Figur 2 ist ersichtlich, dass das Arbeitsfahrzeug 10 zwischen der Vorderachse 34 und der Hinterachse 36 eine Knickgelenkanordnung 40 aufweist, die in bekannter Weise betätigt werden kann, um Richtungswechsel beim Fahren mit dem Arbeitsfahrzeug 10 vornehmen zu können. Über der Vorderachse 34 ist eine haubenartig ausgebildete Karosserieanordnung bzw. Verkleidungsanordnung 42 ersichtlich, unter der sich der Motorraum befindet. In einem seitlichen Verkleidungsbauteil 44 ist der Kühllufteinlass 20 ausgebildet, der in der Zeichnung als schwarze Fläche dargestellt ist.

Figur 3 zeigt eine Schnittdarstellung durch den vorderen Teil des Arbeitsfahrzeugs 10 auf Höhe der Schnittlinie III-III der Figur 2. In dieser Darstellung ist der Blick freigegeben auf den bereits erwähnten Motorraum 46. In dem Motorraum 46 ist eine Brennkraftmaschine 48 untergebracht, die beispielsweise ein Dieselmotor sein kann. Mit der Brennkraftmaschine 48 ist ein Kühlluftgebläse 50 verbunden. Das Kühlluftgebläse 50 weist insbesondere einen Ventilator 52 auf, der mittels einer Welle 54 mit der Brennkraftmaschine gekoppelt ist, so dass der Ventilator 52 bei laufender Brennkraftmaschine in Drehung versetzt wird. Üblicherweise ist das Kühlluftgebläse 52 mit einem Antrieb einer Kühlwasserpumpeneinrichtung der Brennkraftmaschine 48 verbunden.

Das Kühlluftgebläse 50 ist derart ausgeführt, dass mittels des Ventilators 52 Kühlluft KL aus der Umgebung des Arbeitsfahrzeugs 10 durch den Kühllufteinlass 20 in den Motorraum 46 angesogen wird. Die angesaugte Kühlluft KL dient der Kühlung des Motorraums 46 und der Brennkraftmaschine 48. Durch das Kühlluftgebläse 50 wird die Kühlluft KL zu dem in der Fahrzeugvorderseite 22 angeordneten Kühlluftauslass 24 gefördert. Dabei wird die Kühlluft KL mittels des Kühlluftgebläses 50 durch einen Kühler 56 gedrückt bzw. gefördert.

Der Kühler 56 ist stromaufwärts von dem Kühlluftauslass 24 und stromabwärts von dem Kühlluftgebläse 50 angeordnet. Zwischen dem Kühler 56 und der Brennkraftmaschine 48 sind Trennwände 57 angeordnet, die zum Kühlluftgebläse 50 hin trichterartig ausgebildet sind. Hierdurch wird gewährleistet, dass durch das Kühlluftgebläse 50 in Richtung zum Kühler 56 geförderte Kühlluft KL zuverlässig durch den Kühlluftauslass 24 aus dem Motorraum 48 gefördert werden kann und somit nicht erneut in den Motorraum 46 eintritt.

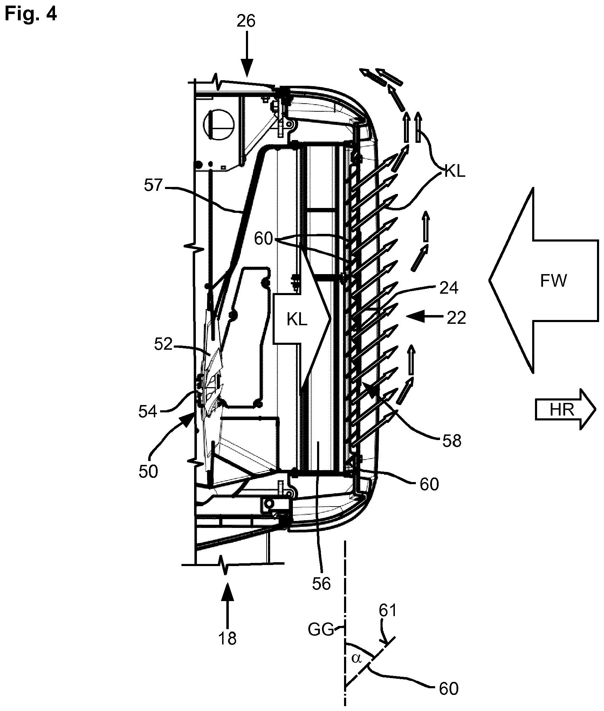

Figur 4 zeigt eine vergrößerte Darstellung des Kühlluftgebläses 50, des Kühlers 56 und des Kühlluftauslasses 24 etwa entsprechend dem in Figur 3 gestrichelt dargestellten Rechteck IV.

Der Kühlluftauslass 24 weist eine Kühlluftablenkeinrichtung 58 auf, die dazu eingerichtet ist, austretende Kühlluft KL in eine vorbestimmte Richtung ausströmen zu lassen. Die Kühlluftablenkeinrichtung 58 umfasst mehrere Luftleitbleche 60. Die Luftleitbleche 60 erstrecken sich in im Wesentlichen vertikaler Richtung von einem oberen Rand 62 des Kühlluftauslasses 24 zu einem unteren Rand 64 des Kühlluftauslasses 24 (siehe Fig. 1).

Bezogen auf eine gedachte Gerade GG, die in einer Ebene des Strömungsquerschnitts des Kühlluftauslasses 24 liegt, sind die Luftleitbleche 60 geneigt angeordnet. Dabei wird zwischen der gedachten Gerade und den Luftleitblechen 60 ein spitzer Winkel α gebildet, wobei dieser Winkel auf derjenigen Seite 61 der Luftleitbleche 60 gemessen wird, die von der ersten Fahrzeugseite 18 abgewandt ist. Der Winkel beträgt etwa 25° bis 60°, vorzugsweise etwa 35° bis 50°. Im vorliegenden Beispiel liegt der Winkel bei etwa 44° bis 46°. Die gedachte Gerade GG verläuft im im Wesentlichen horizontal und parallel zu der Fahrzeugvorderachse 34, was in Figur 3 ersichtlich ist, wobei die Fahrzeugvorderachse 34 stellvertretend durch eine strichpunktierte Linie dargestellt ist.

Durch die Kühlluftumlenkeinrichtung 58 wird von dem Kühlluftgebläse 50 durch den Kühler 56 geförderte Kühlluft KL in Richtung der zweiten Fahrzeugseite 26 abgelenkt. Bewegt sich das Arbeitsfahrzeug vorwärts, also in seiner Hauptfahrtrichtung HR, strömt der Fahrtwind FW gegen die aus dem Kühlluftauslass 24 geförderte Kühlluft KL. Da die Kühlluft KL bereits umgelenkt austritt, wird das Wegströmen der erwärmten Kühlluft in Richtung der zweiten Fahrzeugseite 26 unterstützt. Hierdurch kann sichergestellt werden, dass aus dem Motorraum 46 ausgetretene, erwärmte Kühlluft KL nicht mehr auf der ersten Fahrzeugseite 18 in die Nähe des Kühllufteinlasses 20 gelangen kann. Entsprechend wird durch den Kühllufteinlass 20 zuverlässig kühle Umgebungsluft angesaugt, so dass eine ausreichende Kühlung des Motorraums 46 und der Brennkraftmaschine 48 ermöglicht ist.

Aus der Figur 3 ist noch ersichtlich, dass die Brennkraftmaschine 48 mit ihrer Antriebsachse AA in Längsrichtung des Arbeitsfahrzeugs 10 eingebaut ist, was einen bezogen auf die Längsachse LA des Arbeitsfahrzeugs 10 seitlich versetzten Einbau ermöglicht. Im vorliegenden Beispiel ist die Brennkraftmaschine 48 näher zur ersten Fahrzeugseite 18 hin angeordnet sein, wo auch der Kühllufteinlass 20 angeordnet ist, so dass einströmende Kühlluft KL, gleich die Brennkraftmaschine 48 umströmt.

Der Vollständigkeit halber wird noch darauf hingewiesen, dass der Bedienplatz 12 um 180° drehbar sein kann, derart, dass er entweder in Hauptfahrtrichtung HR oder entgegen der Hauptfahrtrichtung HR ausrichtbar und feststellbar ist. Somit kann der Bedienplatz 12 je nach durchzuführender Arbeit bzw. Fahrstrecke entsprechend den Bedürfnissen ausgerichtet werden. Im dargestellten Beispiel ist der der Bedienplatz 12 durch die Kabine 14 geschützt bzw. umgeben ist. In einem solchen Fall ist der Bedienplatz 12 relativ zur Kabine 14 drehbar. Das heißt, die Kabine 14 bleibt fest mit dem Arbeitsfahrzeug 10 bzw. dessen Karosserie verbunden, während der Bedienplatz 12 samt entsprechender Bedienelemente wie Lenkrad, Fußpedale und sonstiger Bedienelemente gedreht werden kann.

## Patentansprüche

1. Arbeitsfahrzeug mit
einer in einem Motorraum (46) angeordneten Brennkraftmaschine (48),
einem oberhalb des Motorraums (46) angeordneten Bedienplatz (12) und
einer Kühllufteinrichtung mit einem Kühllufteinlass (20), einem Kühlluftauslass (24), einem Kühlluftgebläse (50), sowie einem im Strömungsweg der Kühlluft (KL) durch den Motorraum (46) zwischen dem Kühllufteinlass (20) und dem Kühlluftauslass (24) angeordneten Kühler (56),
wobei
bezogen auf eine Hauptfahrtrichtung (HR) des Arbeitsfahrzeugs (10) der Kühllufteinlass (20) des Motorraums (46) an einer ersten Fahrzeugseite (18) und/oder Fahrzeugunterseite vorgesehen ist und der Kühlluftauslass (24) des Motorraums (46) an einer Fahrzeugvorderseite (22) vorgesehen ist, wobei
der Kühlluftauslass (24) eine Kühlluftablenkeinrichtung (58) aufweist, die so ausgebildet ist, dass austretende Kühlluft (KL) in Richtung einer zweiten Fahrzeugseite (26) geführt wird.

2. Arbeitsfahrzeug nach Anspruch 1, wobei das Kühlluftgebläse (50) bezogen auf den Kühlluftstrom stromaufwärts von dem Kühler (56) und stromabwärts von der Brennkraftmaschine (48) angeordnet ist.

3. Arbeitsfahrzeug nach Anspruch 1 oder 2, wobei der Kühler (56) bezogen auf den Kühlluftstrom stromaufwärts von dem Kühlluftauslass (24) und stromabwärts von dem Kühlluftgebläse (50) angeordnet ist.

4. Arbeitsfahrzeug nach einem der vorhergehenden Ansprüche, wobei die Kühlluftablenkeinrichtung (58) mehrere in dem Kühlluftauslass (24) angeordnete Luftleitbleche (60) aufweist, die bezogen auf eine Strömungsquerschnittsebene durch den Kühlluftauslass (24) geneigt angeordnet sind.

5. Arbeitsfahrzeug nach Anspruch 4, wobei die Luftleitbleche (60) in dem Kühlluftauslass (24) im Wesentlichen vertikal und zueinander parallel angeordnet sind.

6. Arbeitsfahrzeug nach Anspruch 4 oder 5, wobei die Luftleitbleche (60) mit einer in der Strömungsquerschnittsebene liegenden, gedachten Gerade (GG), die im Wesentlichen horizontal, parallel zu einer Fahrzeugvorderachse (34) verläuft, einen spitzen Winkel (a) bilden, der auf der von der ersten Fahrzeugseite (18) abgewandten Luftleitblechseite (61) liegt.

7. Arbeitsfahrzeug nach einem der vorhergehenden Ansprüche, wobei die Brennkraftmaschine (48) mit ihrer Antriebsachse (AA) in Längsrichtung des Arbeitsfahrzeugs (10) eingebaut ist.

8. Arbeitsfahrzeug nach einem der vorhergehenden Ansprüche, wobei der Bedienplatz (12) in einer Kabine (14) untergebracht ist.

9. Arbeitsfahrzeug nach Anspruch 8, wobei die Kabine (14) einen auf der zweiten Fahrzeugseite (26) angeordneten Kabinenzugang (30, 32) aufweist.

10. Arbeitsfahrzeug nach einem der vorhergehenden Ansprüche, wobei das Arbeitsfahrzeug ein Dumper ist mit einer bezogen auf eine Hauptfahrtrichtung (HR) hinter dem Bedienplatz (12) angeordneten Kippmulde (16).

11. Arbeitsfahrzeug nach einem der vorhergehenden Ansprüche, wobei der Bedienplatz um 180° drehbar ist, derart, dass der Bedienplatz entweder in Hauptfahrtrichtung oder entgegen der Hauptfahrtrichtung ausrichtbar und feststellbar ist.

12. Arbeitsfahrzeug nach Anspruch 8 und Anspruch 11, wobei der Bedienplatz relativ zur Kabine drehbar ist.

## Claims

1. Work vehicle comprising:
an internal combustion engine (48) arranged in an engine bay (46),
an operator station (12) arranged above the engine bay (46) and
a cooling air device having a cooling air inlet (20), a cooling air outlet (24), a cooling air fan (50) and a cooler (56) which is arranged in the flow path of the cooling air (KL) through the engine bay (46) between the cooling air inlet (20) and the cooling air outlet (24),
wherein
in relation to a main direction of travel (HR) of the work vehicle (10), the cooling air inlet (20) of the engine bay (46) is provided on a first vehicle side (18) and/or a vehicle lower side, and the cooling air outlet (24) of the engine bay (46) is provided on a vehicle front side (22), wherein
the cooling air outlet (24) has a cooling air deflection device (58) which is configured such that exiting cooling air (KL) is guided in the direction of a second vehicle side (26).

2. Work vehicle as claimed in claim 1, wherein the cooling air fan (50) is arranged, in relation to the cooling air flow, upstream of the cooler (56) and downstream of the internal combustion engine (48).

3. Work vehicle as claimed in claim 1 or 2, wherein the cooler (56) is arranged, in relation to the cooling air flow, upstream of the cooling air outlet (24) and downstream of the cooling air fan (50).

4. Work vehicle as claimed in any one of the preceding claims, wherein the cooling air deflection device (58) has a plurality of air baffles (60) which are arranged in the cooling air outlet (24) and are arranged so as to be inclined in relation to a flow cross-section plane through the cooling air outlet (24).

5. Work vehicle as claimed in claim 4, wherein the air baffles (60) in the cooling air outlet (24) are arranged so as to be substantially vertical and in parallel with one another.

6. Work vehicle as claimed in claim 4 or 5, wherein the air baffles (60) form an acute angle (α) with an imaginary straight line (GG) which lies in a flow cross-section plane and extends substantially horizontally to and in parallel with a vehicle front axle (34), said acute angle located on the air baffle side (61) facing away from the first vehicle side (18).

7. Work vehicle as claimed in any one of the preceding claims, wherein the internal combustion engine (48) is installed with its drive axis (AA) in the longitudinal direction of the work vehicle (10).

8. Work vehicle as claimed in any one of the preceding claims, wherein the operator station (12) is accommodated in a cabin (14).

9. Work vehicle as claimed in claim 8, wherein the cabin (14) has a cabin access (30, 32) which is arranged on the second vehicle side (26).

10. Work vehicle as claimed in any one of the preceding claims, wherein the work vehicle is a dumper having a dump body (16) which, in relation to a main direction of travel (HR), is arranged behind the operator station (12).

11. Work vehicle as claimed in any one of the preceding claims, wherein the operator station can be rotated through 180° such that the operator station can be oriented and fixed either in the main direction of travel or in the direction opposite the main direction of travel.

12. Work vehicle as claimed in claim 8 and 11, wherein the operator station can be rotated relative to the cabin.

## Revendications

1. Véhicule de travail, avec
un moteur à combustion interne (48) disposé dans un compartiment moteur (46),
un poste de commande (12) disposé au-dessus du compartiment moteur (46) et
un dispositif d'air de refroidissement avec une entrée d'air de refroidissement (20), une sortie d'air de refroidissement (24), un ventilateur d'air de refroidissement (50), ainsi qu'avec un refroidisseur (56) disposé sur le chemin d'écoulement de l'air de refroidissement (KL) traversant le compartiment moteur (46) entre l'entrée d'air de refroidissement (20) et la sortie d'air de refroidissement (24),
l'entrée d'air de refroidissement (20) du compartiment moteur (46) étant, par rapport à une direction de marche principale (HR) du véhicule de travail (10), prévue sur un premier côté du véhicule (18) et/ou côté inférieur du véhicule, et la sortie d'air de refroidissement (24) du compartiment moteur (46) étant prévue sur un côté avant du véhicule (22),
la sortie d'air de refroidissement (24) comportant un dispositif déflecteur d'air de refroidissement (58) qui est constitué de telle sorte que de l'air de refroidissement (KL) sortant est guidé en direction d'un deuxième côté du véhicule (26).

2. Véhicule de travail selon la revendication 1, le ventilateur d'air de refroidissement (50) étant, par rapport au flux d'air de refroidissement, disposé en amont du refroidisseur (56) et en aval du moteur à combustion interne (48).

3. Véhicule de travail selon la revendication 1 ou 2, le refroidisseur (56) étant, par rapport au flux d'air de refroidissement, disposé en amont de la sortie d'air de refroidissement (24) et en aval du ventilateur d'air de refroidissement (50).

4. Véhicule de travail selon l'une des revendications précédentes, le dispositif déflecteur d'air de refroidissement (58) comportant plusieurs tôles déflectrices d'air (60), disposées dans la sortie d'air de refroidissement (24), qui, par rapport à un plan de section transversale d'écoulement à travers la sortie d'air de refroidissement (24), sont disposées de façon inclinée.

5. Véhicule de travail selon la revendication 4, les tôles déflectrices d'air (60) dans la sortie d'air de refroidissement (24) étant disposées essentiellement verticalement et parallèlement les unes aux autres.

6. Véhicule de travail selon la revendication 4 ou 5, les tôles déflectrices d'air (60) formant, avec une droite imaginaire (GG) située dans le plan de section transversale qui est essentiellement verticale et parallèle à un essieu avant du véhicule (34), un angle (a) aigu qui est situé sur côté de tôle déflectrice d'air (61) éloigné du premier côté du véhicule (18).

7. Véhicule de travail selon l'une des revendications précédentes, le moteur à combustion interne (48) étant, avec son essieu moteur (AA), monté dans la direction longitudinale du véhicule de travail (10).

8. Véhicule de travail selon l'une des revendications précédentes, le poste de commande (12) étant logé dans une cabine (14).

9. Véhicule de travail selon la revendication 8, la cabine (14) comportant un accès cabine (30, 32) disposé sur le deuxième côté du véhicule (26).

10. Véhicule de travail selon l'une des revendications précédentes, le véhicule de travail étant un dumper avec une benne basculante (16) disposée derrière le poste de commande (12) par rapport à une direction de marche principale (HR).

11. Véhicule de travail selon l'une des revendications précédentes, le poste de commande pouvant tourner de 180° de telle sorte que le poste de commande peut être orienté et immobilisé soit dans la direction de marche principale, soit à l'inverse de la direction de marche principale.

12. Véhicule de travail selon la revendication 8 et la revendication 11, le poste de commande pouvant tourner par rapport à la cabine.
